Europäisches Patentamt

**European Patent Office**

**Office européen des brevets**

(11) Numéro de publication: **0 181 251**

**A1**

(12) # DEMANDE DE BREVET EUROPEEN

(21) Numéro de dépôt: **85402025.2**

(22) Date de dépôt: **18.10.85**

(51) Int. Cl.⁴: **B 23 K 35/30**
**B 23 K 35/34, E 01 B 11/52**

(30) Priorité: **26.10.84 FR 8416377**

(43) Date de publication de la demande:
**14.05.86 Bulletin 86/20**

(84) Etats contractants désignés:
**AT BE CH DE FR GB IT LI LU NL SE**

(71) Demandeur: **COMPAGNIE FRANCAISE DE FORGES ET DE FONDERIES**
**Immeuble Ile-de-France 4 place de la Pyramide La Défense 9**
**F-92800 Puteaux(FR)**

(72) Inventeur: **Poyet, Gérard**
**25 Rue Virgile**
**F-42100 Saint Etienne(FR)**

(74) Mandataire: **Bressand, Georges et al,**
**c/o CABINET LAVOIX 2 Place d'Estienne d'Orves**
**F-75441 Paris Cedex 09(FR)**

(54) **Procédé de raccordement d'une pièce en acier austénitique au manganèse à une pièce en acier ordinaire.**

(57) L'invention concerne un procédé de raccordement d'une pièce en acier austénitique au manganèse à une pièce en acier ordinaire.

On dispose les deux pièces en vis-à-vis, avec un certain écartement dans un moule communiquant avec un creuset de fusion. On dispose dans le moule un mélange de poudre comportant de l'aluminium, un oxyde de fer, un oxyde de nickel et du chrome sous forme d'oxyde ou de métal ainsi que des matières fluidisantes, en quantités dosées pour obtenir par fusion alumino-thermique et coulée dans le moule, une pièce de jonction en acier au chrome-nickel renfermant au moins 12% de chrome et 15% de nickel.

L'invention s'applique, en particulier, au raccordement des appareils de voie aux rails, sur le chantier même.

Croydon Printing Company Ltd.

L'invention concerne un procédé de raccordement d'une pièce en acier austénitique au manganese a une pièce en acier ordinaire par fusion alumino-thermique et coulée d'un métal de jonction.

Lors de la construction ou la réfection des voies ferrées, il peut être nécessaire de raccorder des appareils de voie tels que des coeurs de voie en acier austénitique au manganese (acier du type HADFIELD) aux rails de la voie ferrée en acier ordinaire.

Une technique connue consiste a prévoir à l'extrémité des files de roulement de l'appareil de voie qui sont a joindre aux rails, des pièces intermédiaires, ou coupons, en un acier austénitique au chrome-nickel. De tels coupons peuvent être soudés en usine sur les files de roulement du coeur de voie, celles-ci étant ensuite soudées aux rails sur le chantier ou au contraire soudés d'abord sur les extrémités du rail puis sur les extrémités des files de roulement du coeur de voie.

Dans tous les cas, les opérations a réaliser sur le chantier de la voie ferrée sont longues et complexes et peuvent nécessiter la mise en oeuvre de traitements thermiques.

On a cependant proposé des coeurs de voie munis de coupons de jonction en acier au chrome-nickel qui peuvent être assemblés aux rails sans traitement thermique préalable et sans traitement thermique ultérieur au soudage de raccordement.

Cependant, ce procédé décrit dans le brevet français FR-A-2.509.769 nécessite toujours le soudage préalable en atelier de coupons de raccordement sur les extrémités des files de roulement de l'appareil de voie. Cette opération complique la fabrication du

2

coeur de voie. D'autre part, le soudage sur le chantier demande un temps relativement long pour son exécution.

On connaît d'autre part un procédé de raccordement de rails en acier ordinaire entre eux ou d'appareils de voie en acier au manganèse à des rails par soudure alumino-thermique tel que décrit dans le brevet US-A-1.671.572. Les extrémités des deux rails à joindre sont placées en vis-a-vis avec un certain écartement dans un moule dont la section transversale reproduit la section du rail. Un creuset de fusion alumino-thermique est disposé au-dessus du moule et en communication avec le volume intérieur de celui-ci. On dispose dans le creuset de fusion alumino-thermique un mélange de poudre constitué par de l'aluminium, de l'oxyde de fer, divers éléments sous forme métallique destinés a constituer l'alliage et divers éléments d'addition, tels que des fluidisants, sous forme pulvérulente. On réalise l'allumage et la fusion alumino-thermique de l'ensemble puis on coule le métal obtenu dans le fond du creuset a l'intérieur du moule entre les deux rails. La composition de l'acier liquide obtenu est proche de la composition de l'acier des rails ou comporte certains éléments d'addition, lorsqu'il s'agit de raccorder un appareil de voie et il se constitue entre les rails une pièce de jonction qui se soude à l'une et l'autre des deux extrémités des rails avant de se refroidir. Les scories constituées en grande partie d'alumine sont éliminées au cours de la coulée.

On a proposé d'utiliser une telle technique alumino-thermique, en remplacement d'une fusion et d'une coulée classique, pour constituer sur le chantier une pièce de jonction en acier au chrome-nickel

3

entre un appareil de voie en acier au manganese et les extrémités des rails. Le chrome et le nickel sont alors ajoutés sous forme de poudre métallique et sont refondus dans le mélange par la chaleur dégagée par la réaction alumino-thermique.

Ce procédé théoriquement très intéressant ne permet pas d'obtenir un métal de jonction de très bonne qualité en particulier a cause de son manque d'homogénéité. D'autre part, la chaleur apportée par le métal coulé peut s'averer insuffisante pour que la soudure de la pièce de jonction sur le rail et sur l'appareil de voie soit de très bonne qualité. En effet, une partie non négligeable de la chaleur apportée par la réaction alumino-thermique est absorbée pour la fusion des poudres métalliques de chrome et de nickel.

Le but de l'invention est donc de proposer un procédé de raccordement d'une pièce en acier austénitique au manganese a une pièce en acier ordinaire, par fusion alumino-thermique et coulée d'un métal de jonction allié au chrome et au nickel, consistant à disposer les extrémités a joindre des deux pièces en vis-à-vis avec un certain espacement dans un moule communiquant avec un creuset de fusion, à disposer dans le creuset un mélange de poudre comportant de l'aluminium, un oxyde de fer et des matieres fluidisantes sous forme pulvérulente, a fondre le mélange par alumino-thermie et à couler le métal obtenu dans le moule entre les deux pièces, procédé qui permette d'obtenir très rapidement et tres facilement une jonction de très bonne qualité métallurgique entre les deux pièces.

Dans ce but, le mélange de poudre comporte en outre au moins un oxyde de nickel et duchrome sous forme d'oxyde ou de métal en quantité dosée par rap-

4

port à la quantité d'oxyde de fer, pour la réalisation par fusion et coulée dans le moule d'une pièce de jonction intermédiaire entre les extrémités des pièces à raccorder, en acier au chrome-nickel renfermant au moins 12 % de chrome et au moins 15 % de nickel.

On va maintenant décrire, à titre d'exemples non limitatifs, plusieurs modes de réalisation d'un raccordement suivant l'invention dans le cas d'un coeur de voie en acier au manganese d'une nuance spéciale et de rails en acier ordinaire.

Le coeur de voie est réalisé par moulage en atelier d'un acier contenant 0,78 % de carbone, 14 % de manganèse, 0,27 % de silicium et 1,26 % de molybdène. Cette nuance spéciale d'acier permet d'obtenir une pièce moulée qui présente de bonnes caractéristiques mécaniques à l'état brut de coulée. Le coeur de croisement ne subit donc aucun traitement thermique après coulée.

Pour son raccordement aux rails de la voie, le coeur de croisement est amené sur le chantier et disposé de façon que les extrémités de ses files de roulement soient dans le prolongement des rails correspondants, dans sa position définitive. Pour chacune des jonctions, l'extrémité du rail et l'extrémité de la file de roulement du coeur de croisement sont disposées dans un moule du type utilisé pour la soudure alumino-thermique des rails avec un espacement de l'ordre de 0,05 mètre.

Le creuset de fusion disposé au-dessus du moule et communiquant avec celui-ci est rempli d'un mélange de poudre dont la composition est la suivante (rapportée à 1 kg de métal de jonction à couler) :
- 830 g de chromite
- 254 g de NiO
- 521 g d'oxyde de fer ($Fe_3O_4$ et FeO en mélange)

5

- 20 g de silicium

- 10 g de manganese

- 420 g d'aluminium.

On peut éventuellement remplacer le mélange $Fe_3O_4$-FeO par de l'oxyde $Fe_2O_3$.

Suivant les conditions opérationnelles et les matériaux utilisés, on pourra ajouter comme fluidisants, 10 à 20 g de silico-calcium, de silicate de soude ou de fluorure de calcium ou encore 10 à 20 g d'un mélange de ces substances.

Après fusion par réaction alumino-thermique de l'aluminium métallique sur les oxydes de fer, de nickel et de chrome et séparation du laitier, on coule dans le moule un métal dont la composition est sensiblement la suivante : chrome 20 à 28 %, nickel 20 à 25 %, silicium 1,5 à 4 %, manganèse 0,2 à 1 %, le reste, à l'exclusion des impuretés inévitables, étant constitué par du fer.

Suivant un second mode de réalisation, on utilise un mélange permettant d'obtenir un métal de jonction contenant approximativement 15 a 20 % de chrome et 25 à 30 % de nickel. On donne ci-dessous une composition d'un mélange alumino-thermique a base d'oxydes permettant d'obtenir un métal contenant à peu près 15 % de chrome et 30 % de nickel. Cette composition est rapportée a 1 kg de métal :

- 660 g de chromite

- 380 g de NiO

- 565 g de $Fe_3O_4$ + FeO

- 20 g de silicium

- 10 g de manganese

- 420 g d'aluminium.

Pour obtenir un tel métal de jonction on peut également utiliser un mélange contenant du chrome

6

sous forme métallique au lieu de la chromite. Un tel mélange a la composition suivante (rapportée a 1 kg de métal de jonction) :

- 160 g de chrome
- 380 g de NiO
- 730 g de $Fe_3O_4$ + FeO
- 20 g de silicium
- 10 g de manganese
- 340 g d'aluminium.

De maniere generale, le métal obtenu et coulé par alumino-thermie aura la composition suivante : Chrome 12 a 28 %, Nickel 15 a 30 %, Silicium 1,5 a 4 % et Manganese 0,2 à 1 %.

Après refroidissement, on obtient une pièce de jonction en acier au chrome-nickel parfaitement soudée au coeur de croisement en acier au manganese d'une part et aux rails d'autre part. Cette pièce, d'une longueur d'environ 0,05 mètre, empêche toute diffusion de constituant entre l'acier au manganese du coeur de croisement et l'acier ordinaire du rail.

La jonction obtenue présente une parfaite qualité métallurgique et mécanique sans qu'il soit nécessaire d'opérer un traitement thermique ultérieur a la coulée.

Ceci est obtenu grâce aux conditions dans lesquelles se produit la fusion alumino-thermique et également au choix de la nuance spéciale en acier à 14 % de manganese pour la réalisation du coeur de croisement.

On a effectué des examens micrographiques sur des éprouvettes prélevées dans une jonction réalisée à l'aide du procédé. Ces examens micrographiques ont montré qu'a l'interface métal-soudure, aussi bien du côté de l'acier à 14 % de manganese que du côté de

7

l'acier ordinaire au carbone, les matériaux ne sont pas affectés de façon défavorable par le procédé de raccordement. En particulier, les matériaux de base ne présentent pas de brûlures ou de zones où les carbures sont précipités.

La réalisation du raccordement est très rapide puisque le métal fondu est obtenu par réaction alumino-thermique en une durée voisine d'une minute.

Le raccordement est obtenu sur des pièces sur lesquelles on n'effectue aucune préparation spéciale à part leur disposition dans un moule standard bien connu dans la technique de soudure alumino-thermique des rails.

Dans le cas de formes spéciales ou compliquées, on pourrait réaliser un moule sur place directement sur les pièces à joindre.

Cependant, il faut prendre certaines précautions dans la préparation et la conservation des poudres, ces poudres devant être d'une granulométrie parfaitement déterminée, mélangées de façon homogène au moment de leur introduction dans le creuset de fusion et totalement exemptes d'eau.

Si l'on fait abstraction des additions faibles mais nécessaires de silicium et de manganèse sous forme métallique ou sous forme de composés apportant ces éléments, la composition en poids du mélange de départ, en ce qui concerne les éléments se retrouvant dans la pièce de jonction, est sensiblement la suivante :

40 à 55 % de chromite, 15 à 30 % de NiO et 20 a 40 % de ($Fe_3O_4$ - FeO ou $Fe_2O_3$) en poids, dans le cas où l'on utilise uniquement des oxydes pour apporter des éléments d'alliage.

A ces substances, on ajoute, pour réaliser

8

la réaction alumino-thermique, 20 a 30 % et de préférence à peu près 25 % en poids d'aluminium sous forme pulvérulente. Des ajouts faibles de silicium et de manganese sont nécessaires pour obtenir notamment une bonne coulabilité de l'acier.

Il peut être intéressant, pour des raisons de cinétique de réaction de viser un alliage à 15 % de chrome, 30 % de nickel et à moins de 0,15 % de carbone.

Il est possible d'obtenir une pièce de jonction de qualité suffisante si le chrome est supérieur à 12 % en poids et le nickel supérieur à 15 % en poids.

Dans le procédé suivant l'invention, les pièces de jonction en acier au chrome-nickel servent uniquement a éviter une interdiffusion des constituants des deux éléments à joindre et à assurer ainsi une jonction parfaite de ces pièces. Ces pièces de jonction n'ont pas le rôle de bouclier thermique qui leur est imparti dans le cas où les soudures sur l'appareil de voie et sur le rail sont successives dans le temps. Ceci résulte bien sûr du procédé de jonction par coulée de la pièce intermédiaire mais il est bien évident que la composition de l'acier à 14 % de manganèse qui ne subit pas d'évolution défavorable par échauffement permet d'obtenir une jonction de bonne qualité.

On pourra donc utiliser un coupon de jonction d'une longueur faible comprise entre 0,02 et 0,10 mètre.

Ce coupon de jonction présente une dureté suffisante pour que la surface de roulement résiste en service, sans qu'il soit nécessaire de prévoir une couche d'usure sur cette surface.

9

L'acier au chrome-nickel assurant la jonction a la propriété de durcir par écrouissage par frottement.

L'invention ne se limite pas aux modes de réalisation qui ont été décrits.

C'est ainsi qu'on peut utiliser à la place de chromite et d'oxyde de nickel NiO, d'autres oxydes de chrome et de nickel et éventuellement du chrome métallique, leur quantité étant cependant calculée pour fournir la quantité voulue des éléments chrome et nickel a l'acier inoxydable de la pièce de jonction coulée.

On pourra utiliser le procédé pour la jonction de coeurs de croisement en acier Hadfield classique à 1,2 % de carbone et 12 % de manganese. Cependant, si l'on veut éviter tout traitement thermique sur le chantier, il est préférable d'utiliser un coeur de croisementen acier à 0,7 a 0,9 % de carbone, moins de 1 % de silicium, 13 à 15 % de manganèse et 1 à 18 % de molybdène.

Enfin, le procédé suivant l'invention peut être utilisé pour le raccordement de pièces en acier austénitique au manganèse a des pièces en acier ordinaire différentes d'appareils de voie et de rails respectivement. Le procédé suivant l'invention pourrait être adapté également à l'obtention de pièces coulées en acier inoxydable par méthode alumino-thermique ou pour l'exécution de certaines réparations.

REVENDICATIONS

1.- Procédé de raccordement d'une pièce en acier austénitique au manganèse à une pièce en acier ordinaire, par fusion alumino-thermique et coulée d'un métal de jonction allié au chrome-nickel, consistant à disposer les extrémités à joindre des deux pièces en vis-a-vis, avec un certain espacement, dans un moule communiquant avec un creuset de fusion, a disposer dans le creuset un mélange de poudre comprenant de l'aluminium, un oxyde de fer et des matières fluidisantes sous forme pulvérulente, à fondre le mélange par alumino-thermie et à couler le métal obtenu dans le moule entre les deux pièces, caractérisé par le fait que le mélange de poudre comporte en outre au moins un oxyde de nickel et du chrome, sous forme d'oxyde ou de métal, en quantités dosées par rapport à la quantité d'oxyde de fer, pour la réalisation par fusion et coulée dans le moule d'une pièce de jonction intermédiaire entre les extrémités des pièces à raccorder, en acier au chrome-nickel renfermant au moins 12 % de chrome et au moins 15 % de nickel.

2.- Procédé de raccordement suivant la revendication 1, caractérisé par le fait que le mélange de poudre apportant les éléments d'alliage renferme sensiblement 40 à 55 % de chromite, 15 à 30 % d'oxyde de nickel NiO et 20 à 40 % d'oxyde de fer ($Fe_3O_4$-FeO ou $Fe_2O_3$), en poids ainsi que de petites quantités de poudre de silicium ou de manganèse métallique et qu'on ajoute à ce mélange de la poudre d'aluminium dans une proportion comprise entre 20 à 30 % en poids du mélange de poudre apportant les éléments d'alliage.

3.- Procédé de raccordement suivant la revendication 2, caractérisé par le fait que la propor-

0181251

11

tion de poudre d'aluminium par rapport au mélange de poudres apportant les éléments d'alliage est sensiblement égale a 25 %.

4.- Procédé de raccordement suivant la revendication 1, caractérisé par le fait que la pièce de jonction intermédiaire renferme, en proportions pondérales, 12 à 28 % de chrome, 15 à 30 % de nickel, 1,5 à 4 % de silicium, 0,2 à 1 % de manganese, le reste, à l'exclusion des impuretés inévitables, étant du fer.

5.- Procédé de raccordement suivant l'une quelconque des revendications 1, 2, 3 et 4, caractérisé par le fait que le mélange de poudres comporte une addition d'une substance choisie dans le groupe : silico-calcium, silicate de soude, fluorure de calcium, comme matières fluidisantes pour favoriser la décantation du laitier formé lors de la fusion.

6.- Procédé de raccordement suivant l'une quelconque des revendications 1 à 5, dans le cas où la pièce en acier austénitique au manganèse est un appareil de voie ferrée et la pièce en acier ordinaire un rail, caractérisé par le fait que le raccordement est effectué entièrement sur le chantier de la voie ferrée, sans mise en oeuvre de traitement thermique avant ni après la coulée de métal de jonction.

7.- Procédé de raccordement suivant la revendication 6, caractérisé par le fait que l'appareil de voie est en un acier au manganese dont la composition est la suivante : carbone 0,7 à 0,9 %, silicium moins de 1 %, manganèse 13 à 15 %, molybdène 1 à 1,8 %.

8.- Procédé de raccordement suivant l'une quelconque des revendications 6 et 7, caractérisé par le fait que les extrémités à joindre de l'appareil de voie et des rails sont disposées dans le moule avec un écartement compris entre 0,02 et 0,10 mètre.

**0181251**

Numéro de la demande

RAPPORT DE RECHERCHE EUROPEENNE

Office européen
des brevets

EP 85 40 2025

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| D,Y | US-A-1 671 572 (C.L. DELACHAUX) <br> * Revendications 1,2 * | 1 | B 23 K 35/30 <br> B 23 K 35/34 <br> E 01 B 11/52 |
| | --- | | |
| Y | US-A-3 890 168 (H.A. SHUMWAY) <br> * Revendications; colonnes 8-10 * | 1 | |
| | --- | | |
| A,D | EP-A-0 070 774 (CREUSOT-LOIRE) <br> * Revendications 1,2,5,6 * | 4,6-8 | |
| | --- | | |
| A | FR-A-2 409 122 (BRITISH RAILWAYS BOARD et al.) | | |
| | --- | | |
| A | FR-A-1 538 838 (KLÖCKNER-WERKE) | | |
| | --- | | DOMAINES TECHNIQUES RECHERCHES (Int Cl 4) |
| A | US-A-3 649 390 (W. AHLERT et al.) | | |
| | --- | | |
| A | US-A-1 942 004 (W. SANDER) | | B 23 K <br> B 22 D <br> E 01 B |
| | ----- | | |

Le présent rapport de recherche a été établi pour toutes les revendications

| Lieu de la recherche <br> LA HAYE | Date d'achèvement de la recherche <br> 11-12-1985 | Examinateur <br> MOLLET G.H.J. |
|---|---|---|